# NEUE EUROPÄISCHE PATENTSCHRIFT

(11) **EP 0 654 062 B2**
(45) Veröffentlichungstag und Bekanntmachung des Hinweises auf die Entscheidung über den Einspruch: **17.01.2001**
(45) Hinweis auf die Patenterteilung: 05.11.1997
(21) Anmeldenummer: 93917627.7
(22) Anmeldetag: 22.07.1993
(51) Int. Cl.: C08J 9/14, C08L 75/04

(54) **VERFAHREN ZUR HERSTELLUNG VON HARTEN POLYURETHANSCHAUMSTOFFEN**
METHOD OF PRODUCING HARD POLYURETHANE FOAMS
PROCEDE DE FABRICATION DE MOUSSES DE POLYURETHANNE

(30) Priorität: 04.08.1992 DE 4225765
(43) Veröffentlichungstag der Anmeldung: 24.05.1995
(73) Patentinhaber: BAYER AG, 51368 Leverkusen (DE)
(72) Erfinder: LAMBERTS, Wilhelm, D-51373 Leverkusen (DE); EISEN, Norbert, D-50937 Köln (DE)
(86) Internationale Anmeldenummer: EP9301957
(87) Internationale Veröffentlichungsnummer: WO9403532

(56) Entgegenhaltungen:
- EP-A- 0 202 732
- EP-A- 0 212 767
- EP-A- 0 344 537
- EP-A- 0 351 614
- EP-A- 0 432 672
- EP-A- 0 450 308
- EP-A1- 0 381 986
- EP-A1- 0 477 920
- EP-B1- 0 108 713
- WO-A-93/00395
- DE-A- 4 026 893
- US-A- 3 034 996
- Kunststoff-Handbuch, Band VII, Polyurethane, Carl Hanser Verlag, München 1966, Seiten 103-113

## Beschreibung

Geschlossenzellige Polyurethan-Hartschaumstoffe finden schon seit vielen Jahren aufgrund ihrer hervorragenden Wärmedämmeigenschaften Anwendung bei der Dämmung von Kühl- und Gefriergeräten, von industriellen Anlagen, Tanklagern, Rohrleitungen, im Schiffsbau sowie bei zahlreichen Dämmaufgaben in der Bauindustrie.

Die Wärmeleitfähigkeit des Polyurethan-Hartschaumstoffes, der weitgehend geschlossene Zellen aufweist, ist in starkem Maße abhängig von der Art des verwendeten Treibmittels bzw. Zellgases. Als besonders geeignet hatten sich hierzu die perhalogenierten Fluorchlorkohlenwasserstoffe (FCKW) erwiesen, insbesondere Trichlorfluormethan (R11), welches eine besonders geringe Wärmeleitfähigkeit aufweist Diese Stoffe sind chemisch inert, infolgedessen ungiftig und nicht brennbar. Die perhalogenierten Fluorchlorkohlenwasserstoffe gelangen jedoch infolge ihrer hohen Stabilität in die Stratosphäre, wo sie aufgrund ihres Gehaltes an Chlor zum Abbau des dort vorhandenen Ozons beitragen sollen (z.B. Molina, Rowland Mature 249 (1974) 810; Erster Zwischenbericht der Bundestags-Enquete-Kommision "Vorsorge zum Schutz der Erdatmosphäre" vom 02.11.1988, Deutscher Bundestag, Referat Öffentlichkeitsarbeit, Bonn).

Man hat daher vorgeschlagen, anstelle des perhalogenierten Fluorchlorkohlenwasserstoff teilfluorierte Kohlenwasserstoffe (Hydrofluoralkane) wie 1,1,1,4,4,4-Hexafluorbutan als Treibmittel für Kunststoffschaumstoffe einschließlich Polyurethanschaumstoffe zu verwenden (vergl. EP-PS 344 537, US-PS 4 931 482).

Die Hydrofluoralkane, die noch mindestens eine Kohlenstoff-Wasserstoff-Bindung aufweisen, enthalten keine Chloratome mehr und weisen infolgedessen einen ODP-Wert (Ozone Depletion Potential) von Null auf. (Zum Vergleich: R11 : ODP = 1)

Typische Vertreter dieser Substanzklasse sind neben dem 1,1,1,4,4,4-Hexafluorbutan (R356) das 1,1,1,2-Tetrafluorethan (R134a).

Teilfluorierte Kohlenwasserstoffe sind aufgrund ihres chemischen Aufbaus sehr unpolar und mischen sich insofern schlecht mit den für die Hartschaumstoffherstellung gebräuchlichen Polyolen. Dies ist aber eine für die übliche Herstellungstechnik wichtige Voraussetzung, bei der die Polyol- und Isocyanatkomponenten maschinell mit einander vermischt werden.

Die Polyolkomponente enthält außer den reaktiven Polyether- oder Polyesterpolyolen auch das Treibmittel und die Hilfsstoffe wie Aktivatoren, Emulgatoren und Stabilisatoren in gelöster Form. Auf der Polyolseite liegt also ein einphasiges Gemisch vor.

Die geringe Löslichkeit der teilfluorierten Kohlenwasserstoffe führt bei äquimolarem Austausch von herkömmlichen Treibmitteln wie z.B. R11 gegen die neuen, umweltfreundlichen Verbindungen in handelsüblichen Formulierungen zur Bildung zweier Phasen, die sich konventionell nicht mehr verarbeiten lassen.

EP-A-0 351 614 beschreibt die Herstellung von Polyurethanschäumen wobei perfluorierte oder teilfluorierte Kohlenwasserstoffe oder Schwefelhexafluorid als Treibmittel verwendet werden. Als Flammschutzmittel für diese Massen werden Trikresylphosphat und gewisse Halogenalkylphosphate vorgeschlagen.

Aufgabe der Erfindung war daher, die Löslichkeit von teilfluorierten Kohlenwasserstoffen in Polyolen zu erhöhen, so daß bei äquimolarem Ersatz von R11 durch diese Stoffe eine einphasige Polyolkomponente erhalten wird.

Überraschenderweise wurde gefunden, daß bei Zugabe von bestimmten Lösungsvermitlern die Löslichkeit an teilfluorierten Alkanen im Polyol deutlich erhöht wird.

Gegenstand der Erfindung ist ein Verfahren zur Herstellung von harten Polyurethanschaumstoffen durch Umsetzung von
1) Polyisocyanaten mit
2) Verbindungen vom Molekulargewicht 92 bis 10.000, welche mindestens zwei gegenüber Isocyanaten aktive Wasserstoffatome aufweisen, in Gegenwart von
3) Hydrofluoralkanen als Treibmittel und von
4) Lösungsvermittlern sowie gegebenenfalls in Gegenwart von
5) weiteren an sich bekannten Hilfs- und Zusatzstoffen,
dadurch gekennzeichnet, daß als Lösungsvermittler 4) die folgende Verbindung 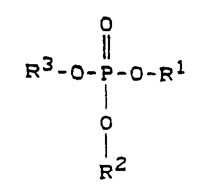 wobei R¹-R³ C₁-C₁₂-Alkyl, oder C₅-C₁₀-Cycloalkyl bedeuten,
verwendet wird.

Für die Herstellung der harten Polyurethanschaumstoffe werden als Ausgangskomponenten eingesetzt:
1. Aliphatische, cycloaliphatische, araliphatische, aromatische und heterocyclische Polyisocyanate, wie sie z.B. von W. Siefken in Justus Liebigs Annalen der Chemie, 562 Seiten 75 bis 136 beschrieben werden, beispielsweise solche der Formel

   Q(NCO)ₙ,

   in der
   - n: 2 bis 4 vorzugsweise 2, und
   - Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,
   z.B. solche Polyisocyanate, wie sie in der DE-OS 2 832 253, Seiten 10 bis 11, beschrieben werden.
   Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.
2 Ausgangskomponenten sind ferner Verbindungen mit mindestens zwei gegenüber Isocyanaten reaktionsfähigen Wasserstoffatomen und einem Molekulargewicht von 92 bis 10 000. Hierunter versteht man neben Aminogruppen, Thiolgruppen oder Carboxylgruppen aufweisenden Verbindungen, vorzugsweise Hydroxylgruppen aufweisende Verbindungen, insbesondere 2 bis 8 Hydroxylgruppen aufweisende Verbindungen, speziell solche vom Molekulargewicht 200 bis 1200, vorzugsweise 250 bis 500, z B derartige, mindestens 2, in der Regel 2 bis 8, vorzugsweise 2 bis 6, Hydroxylgruppen aufweisende Polyether und Polyester, wie sie für die Herstellung von homogenen und von zellförmigen Polyurethanen an sich bekannt sind und wie sie z B. in der DE-OS 2 832 253, Seiten 11 bis 18, beschrieben werden.
3. Als Treibmittel werden leicht flüchtige teilfluorierte Kohlenwasserstoffe (Hydrofluoralkane) verwendet, vorzugsweise 1,1,1,4,4,4-Hexafluorbutan (R356), 1,1,1,2-Tetrafluorethan (R134a) und/oder 1,1,1,2,3,3,3-Heptafluorpropan (R227).
   Gegebenenfalls werden anteilig Wasser und/ oder weitere leicht flüchtige organische Substanzen als Treibmittel mitverwendet.
4. Erfindungsgemäß werden die bereits genannten Lösungsvermittler eingesetzt, vorzugsweise in Mengen von 1 bis 10 Gew.-Teilen, insbesondere von 3 bis 5 Gew - Teilen, bezogen auf 100 Gew.-Teile der Komponente 2).
   Bevorzugte Verbindungen sind Triethylphosphat und Tributylphosphat.
5 Gegebenenfalls mitverwendet werden weitere an sich bekannte Hilfs- und Zusatzstoffe, wie Flammschutzmittel, Katalysatoren und Schaumstabilisatoren.
   Als Flammschutzmittel werden an sich bekannte Flammschutzmittel, vorzugsweise bei 20°C flüssige Produkte, verwendet.
   Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben. Als Katalysatoren kommen die aus der Polyurethanchemie an sich bekannten Katalysatoren wie tert.-Amine und/oder metallorganische Verbindungen in Frage.
   Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.
   Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Durchführung des erfindungsgemäßen Verfahrens: Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solche, die in der US-PS 2 764 565 beschrieben werden. Einzelheiten über Verarbeitungseinrichtungen, die auch erfindungsgemäß in Frage kommen, werden im Kunststoff-Handbuch, Band VIII, herausgegeben von Vieweg und Höchtlen. Carl-Hanser-Verlag, München 1966, z.B. auf den Seiten 121 bis 205 beschrieben.

Erfindungsgemäß wird im Kennzahlbereich von 100 bis 300, vorzugsweise 100 bis 130 gearbeitet.

Bei der Schaumherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage.

In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "over-charging" gearbeitet: eine derartige Verfahrensweise ist z.B. aus den US-PS 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekanntgeworden sind.

Vorzugsweise wird das erfindungsgemäße Verfahren zur Ausschäumung von Kühl- und Kältegeräten verwendet.

Selbstverständlich können aber auch Schaumstoffe durch Blockverschäumung oder nach dem an sich bekannten Doppeltransportbandverfahren hergestellt werden.

Die nach der Erfindung erhältlichen Hartschaumstoffe finden Anwendung z.B. im Bauwesen sowie für die Dämmung von Fernwärmerohren und Containern.

### Beispiele

100 g einer Polyolmischung, bestehend aus Grundpolyol, Aktivator, Stabilisator und Wasser wird solange mit 1,1,1,4,4,4-Hexafluorbutan versetzt, bis eine Phasentrennung zu verzeichnen ist. Diese Menge wird als Grenzkonzentration der Löslichkeit in der jeweiligen Polyolabmischung bezeichnet.

Die beispielhaften Polyolabmischungen bestehen jeweils 95 g Grundpolyol, 1 g Aktivator (Dimethylcyclohexylamin), 2 g Stabilisator B 8421 (Goldschmidt AG) und 2 g Wasser. Zusätzlich werden 5 g der erfindungsgemäßen Emulgatoren zugesetzt.
- Polyol 1:: Polyol auf Basis von Sucrose, Propylenglykol, Wasser, Propylenoxid mit mittlerem Molekulargewicht von 850 g/mol
- Polyol 2:: Polyol auf Basis Sorbit, Propylenglykol, Propylenoxid mit mittlerem Molekulargewicht von 750 g/mol
- Polyol 3:: Polyol auf Basis von Ethylendiamin, Propylenoxid mit mittlerem Molekulargewicht von 480 g/mol
- Polyol 4:: Polyol auf Basis von Triethanolamin und Propylenoxid mit mittlerem Molekulargewicht von 1.100 g/mol

### Hierbei ist Emulgator

1: Triethylphosphat
2: Tributylphosphat

### Löslichkeit von 1,1,1,4,4,4-Hexafluorbutan [g]

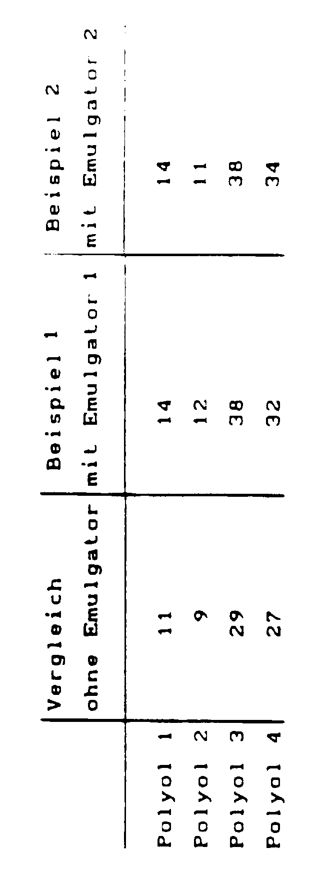

Die erfindungsgemßen Beispiele 1 und 2 zeigen ganz deut-lich, daß die löslichen Mengen von 1,1,1,4,4,4-Hexafluorbutan im Polyol gegenüber dem Vergleich deutlich gesteigert werden konnten.

Je höher die lösliche Menge des Treibmittels im Polyol, um so höher ist sein Anteil im Zellgas des darauf gefertigten Hartschaumstoffes und um so geringer ist damit auch die Wärmeleitzahl.

## Patentansprüche

1. Verfahren zur Herstellung von harten Polyurethanschaumstoffen durch Umsetzung von
1) Polyisocyanaten mit
2) Verbindungen vom Molekulargewicht 92 bis 10.000, welche mindestens zwei gegenüber Isocyanaten aktive Wasserstoffatome aufweisen, in Gegenwart von
3) Hydrofluoralkanen als Treibmittel und von
4) Lösungsvermittlern sowie gegebenenfalls in Gegenwart von
5) weiteren an sich bekannten Hilfs- und Zusatzstoffen,
dadurch gekennzeichnet, daß als Lösungsvermittler die folgende Verbindung 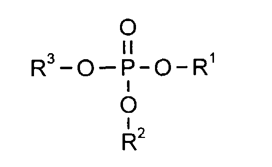 wobei R¹-R³ C₁-C₁₂-Alkyl, oder C₅-C₁₀-Cycloalkyl bedeuten,
verwendet wird.

2. Verfahren gemäß Anspruch 1, dadurch gekennzeichnet, daß das als Lösungsvermittler Triethylphosphat verwendet wird.

3. Verfahren gemäß Anspruch 1, dadurch gekennzeichnet, daß als Lösungsvermittler Tributylphosphat verwendet wird.

4. Verfahren nach Anspruch 1 bis 3, dadurch gekennzeichnet, daß die Lösungsvermittler in Mengen von 1 bis 10 Gewichtsteilen pro 100 Gewichtsteilen der Komponenten 2) eingesetzt werden.

5. Verfahren gemäß Anspruch 1 bis 4, dadurch gekennzeichnet, daß als Treibmittel 1,1,1,4,4,4,-Hexafluorbutan verwendet wird.

6. Verfahren nach Anspruch 1 bis 4, dadurch gekennzeichnet, daß als Treibmittel 1,1,1,2-Tetrafluorethan verwendet wird.

7. Verfahren nach Anspruch 1 bis 4, dadurch gekennzeichnet, daß als Treibmittel 1,1,1,2,3,3,3-Heptafluorpropan verwendet wird.

## Claims

1. Process for producing rigid polyurethane foams by the reaction of
1) polyisocyanates with
2) compounds having a molecular weight of from 92 to 10,000, which have at least two hydrogen atoms active towards isocyanates, in the presence of
3) hydrofluoroalkanes as blowing agents and of
4) solubilisers as well as optionally in the presence of
5) other known per se auxiliary substances and additives,
characterised in that the following compound is used as solubiliser 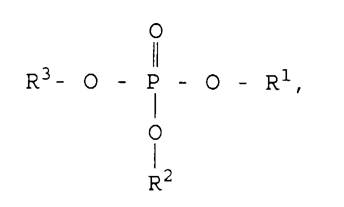 wherein R¹ to R³ denote C₁-C₁₂-alkyl, C₅-C₁₀-cycloalkyl.

2. Process according to claim 1, characterised in that triethyl phosphate is used as a solubiliser.

3. Process according to claim 1, characterised in that tributyl phosphate is used as a solubiliser.

4. Process according to claims 1 to 3, characterised in that the solubilisers are used in quantities of from 1 to 10 parts by weight per 100 parts by weight of component 2).

5. Process according to claims 1 to 4, characterised in that 1,1,1,4,4,4-hexafluorobutane is used as a blowing agent.

6. Process according to claims 1 to 4, characterised in that 1,1,1,2-tetrafluoroethane is used as a blowing agent.

7. Process according to claims 1 to 4, characterised in that 1,1,1,2,3,3,3-heptafluoropropane is used as a blowing agent.

## Revendications

1. Procédé pour la préparation de mousse rigides de polyuréthane par réaction
1) de polyisocyanates avec
2) des composés de poids moléculaire de 92 à 10 000, lesquels présentent au moins deux atomes d'hydrogène actifs par rapport aux isocyanates en présence
3) d'hydrofluoroalcanes comme agent moussant et
4) d'agents de solubilisation ainsi qu'éventuellement en présence
5 d'autres additifs et auxiliaires connus en eux-mêmes,
caractérisé en ce qu'on utilise comme agent de solubilisation le composé suivant 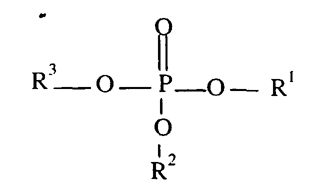 où R¹-R³ représentent un groupe alkyle en C₁-C₁₂, ou un groupe cycloalkyle en C₅-C₁₀.

2. Procédé selon la revendication 1, caractérisé en ce qu'on utilise comme agent de solubilisation du phosphate de triéthyle.

3. Procédé selon la revendication 1, caractérisé en ce qu'on utilise comme agent de solubilisation du phosphate de tributyle.

4. Procédé selon la revendication 1 à 3, caractérisé en ce qu'on utilise l'agent de solubilisation en des quantités de 1 à 10 parties en poids pour 100 parties en poids du constituant 2).

5. Procédé selon la revendication 1 à 4, caractérisé en ce qu'on utilise comme agent moussant du 1,1,1,4,4,4-hexafluorobutane.

6. Procédé selon la revendication 1 à 4, caractérisé en ce qu'on utilise comme agent moussant du 1,1,1,2- tétrafluoroéthane.

7. Procédé selon la revendication 1 à 4, caractérisé en ce qu'on utilise comme agent moussant du 1,1,1,2,3,3,3-heptafluoropropane.
